# EUROPEAN PATENT APPLICATION

(11) **EP 4 657 366 A1**
(43) Date of publication of application: **03.12.2025**
(21) Application number: 25178822.0
(22) Date of filing: 26.05.2025
(51) Int. Cl.: G06T 5/77, G06T 5/50, G06T 7/00, G06T 11/00, H04N 1/387, G06T 11/60

(54) **SYSTEM FOR GENERATING VIRTUAL DEFECT IMAGE AND METHOD THEREOF**

(30) Priority: 28.05.2024 KR 20240069417; 27.08.2024 KR 20240114914
(71) Applicant: Doosan Enerbility Co., Ltd., Seongsan-gu Changwon-si, Gyeongsangnam-do 51711 (KR)
(72) Inventor: PARK, Gunghul, 06625 Seoul (KR); LEE, JungMin, 06359 Seoul (KR)
(74) Representative: Ter Meer Steinmeister & Partner

(57) **Abstract**

The present disclosure relates to a system and method for generating a virtual defect image. According to the present disclosure, a system for generating a virtual defect image may include an input unit configured to receive a normal image and a defect image comprising at least one defect, an extraction unit configured to segment and extract a defect, represented by a plurality of pixels. in the defect image, a preprocessing unit configured to apply a preset transformation method on the defect so as to transform the defect into a transformed defect, and a synthesis unit configured to synthesize the transformed defect into the normal image and adjust the transformed defect.

## Description

This application claims under 35 U.S.C. §119(a) the benefit of priority to Korean Patent Application No. 10-2024-0069417 filed on May, 28, 2024 and No. 10-2024-0114914 filed on August, 27, 2024.

### BACKGROUND

### Technical Field

The present disclosure relates to a system for generating a virtual defect image and method thereof, and more specifically, to the system for generating a virtual defect image and method thereof, which segment a defect from an image including the defect, synthesize the defect into a normal image, and generate a virtual defect image using an image blending.

### Background Art

In the manufacturing industry, it is important to detect a defect in manufactured products. In particular, a technology of detecting various defects by generating virtual defect images and training artificial intelligence models based on virtual defect images is being actively studied.

However, the conventional technology of generating a virtual defect image has a limitation in that an edge of a defect becomes visible when a defect portion of the defect image is cropped and synthesized into a normal image, thereby degrading the learning performance of the artificial intelligence models.

Accordingly, there is a need for a technology capable of generating a virtual defect image in a more natural manner.

The background technology of the present disclosure is disclosed in Korean Unexamined Patent Publication No. 10-2024-0044757 (published on April 05, 2024).

### SUMMARY OF THE DISCLOSURE

The present disclosure is directed to providing a system for generating a virtual defect image and method thereof, which segment a defect from an image including the defect, synthesize the defect into a normal image, and generate a virtual defect image using an image blending.

The object is solved by the features of the independent claims. Preferred embodiments are given the dependent claims.

According to an embodiment of the present disclosure, there is provided a system for generating a virtual defect image, which includes an input unit configured to receive a normal image and a defect image comprising at least one defect, an extraction unit configured to segment and extract a defect, represented by a plurality of pixels , from among the at least one defect in the defect image, a preprocessing unit configured to apply a preset transformation method on the defect so as to transform the defect into a transformed defect, and a synthesis unit configured to synthesize the transformed defect into the normal image and adjust the transformed defect.

The synthesis unit may identify a defect type for the defect and synthesize the transformed defect at a location within a preset area in which the defect type is expected to occur, based on the defect type.

The preprocessing unit may match an identifier to the defect according to an occurrence location of the defect and apply the preset transformation method to the defect to transform the defect into the transformed defect.

The synthesis unit may copy and synthesize the transformed defect into the normal image and select pixels of an edge of the transformed defect as adjustment targets.

The synthesis unit may set an edge condition so that an edge portion of the transformed defect synthesized into the normal image has substantially the same pixel characteristics as an adjacent edge portion of the normal image that surrounds the transformed defect.

The synthesis unit may adjust a pixel value of the edge portion so that the edge condition is satisfied.

The synthesis unit may calculate a gradient of the transformed defect from the normal image with the transformed defect synthesized.

The synthesis unit may calculate a gradient of the normal image.

The synthesis unit may extract an edge of the transformed defect.

The synthesis unit may extract magnitudes of the gradient of the transformed defect and the gradient of the normal image in each of x and y directions.

The synthesis unit may calculate a maximum gradient using large values among the magnitudes in each of the x and y directions.

The synthesis unit may calculate a function between the normal image and the transformed defect using a differential equation for the edge and the maximum gradient calculated using the large values among the magnitudes in each of the x and y directions.

The synthesis unit may multiply the normal image by the function to adjust the pixel value of the edge portion.

The synthesis unit may apply an image blending or a Poisson's equation to the pixels selected as the adjustment targets and adjust the pixels.

According to another embodiment of the present disclosure, there is provided a method of generating a virtual defect image, which includes receiving, by an input unit, a normal image and a defect image comprising at least one defect, segmenting and extracting, by an extraction unit, a defect, represented by a plurality of pixels, from among the at least one defect in the defect image, applying, by a preprocessing unit, a preset transformation method on the defect so as to transform the defect into a transformed defect, and synthesizing, by a synthesis unit, the transformed defect into the normal image and adjust the transformed defect.

In this way, according to the present disclosure, it is possible to decrease the saliency of the edge artifact caused by cropping a defect from a defect image and synthesizing it into a normal image.

In addition, it is possible to synthesize the relatively large defect by extracting the defect and transforming the extracted defect through a set of predefined transformation methods.

### BRIEF DESCRIPTION OF THE DRAWINGS

FIG. 1 is a block diagram of a system for generating a virtual defect image according to one embodiment of the present disclosure.
FIG. 2 is a flowchart of a method of generating a virtual defect image according to another embodiment of the present disclosure.
FIG. 3 is an exemplary view illustrating an example of extracting a defect and generating a virtual image according to another embodiment of the present disclosure.
FIG. 4 is an exemplary view illustrating an example of extracting a defect according to another embodiment of the present disclosure.
FIG. 5 is an exemplary view illustrating an example of transforming an extracted defect according to another embodiment of the present disclosure.
FIG. 6 is an exemplary view illustrating an example of adjusting a defect according to another embodiment of the present disclosure.
FIG. 7 is a view illustrating a computing device according to the exemplary embodiment of the present disclosure.

### DETAILED DESCRIPTION

Hereinafter, exemplary embodiments according to the present disclosure will be described in detail with reference to the accompanying drawings. In this process, thicknesses of lines, sizes of components, or the like illustrated in the drawings may be exaggerated for clarity and convenience of description.

In addition, terms to be described below are the terms defined in consideration of functions in the present disclosure, which may vary depending on the intention or custom of a user or an operator. Accordingly, the definition of these terms should be made based on the contents throughout the specification.

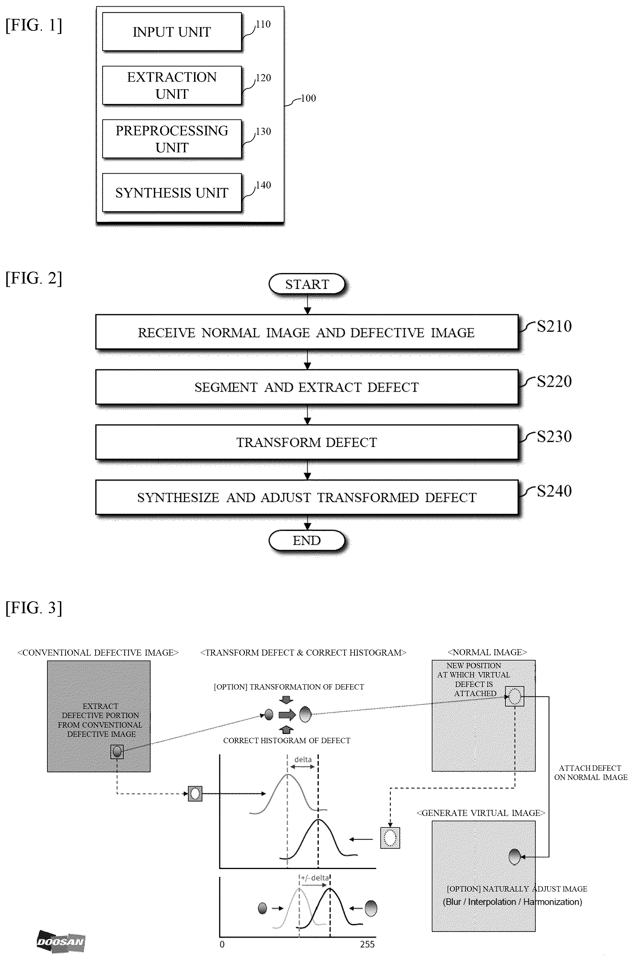

FIG. 1 is a block diagram of a system for generating a virtual defect image according to one embodiment of the present disclosure.

As illustrated in FIG. 1, a system 100 for generating a virtual defect image may include an input unit 110, an extraction unit 120, a preprocessing unit 130, and a synthesis unit 140.

First, the input unit 110 may receive a normal image and a defect image including at least one defect.

Specifically, the input unit 110 may receive a normal image and a defect image including at least one defect from at least one resource (not illustrated) such as a database, a server, a photographing device, or the like.

Next, the extraction unit 120 may segment and extract a defect, represented by a plurality of pixels, from among the at least one defect in the defect image.

Specifically, the extraction unit 120 may segment and extract a defect from the defect image on the basis of a pixel according to a signal received from the at least one resource.

In this case, the extraction unit 120 may not crop and extract a defect as a rectangular area, but may segment and extract the defect on a pixel basis, thereby facilitating the synthesis of only a defective area.

Next, the preprocessing unit 130 may apply a preset transformation method (e.g., rotating, shifting, scaling down, enlarging, or the like) to the defect to transform the defect into a transformed defect.

Specifically, the preprocessing unit 130 may match an identifier to the defect according to an occurrence location of the defect and apply the preset transformation method (e.g., rotating, shifting, scaling down, enlarging, or the like) to the defect to transform the defect into the transformed defect. In this case, the identifier may include the defect type and at least one preset area in which the defect type is expected to occur.

That is, the preprocessing unit 130 may transform the state of the defect by rotating, shifting, scaling down, or enlarging the extracted defect.

Next, the synthesis unit 140 may synthesize the transformed defect with a normal image and adjust the transformed defect.

Specifically, the synthesis unit 140 may identify the defect type for the defect and synthesize the defect at a location within the preset area in which the defect type is expected to occur, based on the defect type. In this case, the identification of the defect type may be performed by a pre-trained identification model. The identification model is trained to output the defect type in response to an input image including a defect, using defect types and corresponding defect images as training data.

In addition, the synthesis unit 140 may copy and synthesize the transformed defect into the normal image and select pixels in a region adjacent to the edge of the transformed defect as adjustment targets.

In addition, the synthesis unit 140 may apply a predetermined adjustment method (e.g., image blending, Poisson's equation, or the like) and adjust the pixels selected as the adjustment targets.

Additionally, the system 100 may further comprise a control unit (not illustrated) configured to analyze the generated virtual defect image and output a control signal to an external device based on the defect type, size, and/or location, wherein the external device includes at least one of an image scanner, a manufacturing inspection apparatus, or another image-processing device. The control signal may include commands for adjusting scanning resolution, modifying inspection parameters, or changing focus regions in response to characteristics of the virtual defect image.

Hereinafter, the method for generating a virtual defect image will be described in more detail with reference to FIGS. 2 to 4.

FIG. 2 is a flowchart of a method of generating a virtual defect image according to another embodiment of the present disclosure, and FIG. 3 is an exemplary view illustrating an example of extracting a defect and generating a virtual image according to another embodiment of the present disclosure.

As illustrated in FIGS. 2 and 3, the input unit 110 may receive a normal image and a defect image including at least one defect (S210).

Specifically, the input unit 110 may receive a normal image and a defect image including at least one defect from at least one resources (not illustrated) such as a database, a server, a photographing device, or the like.

Next, the extraction unit 120 may segment and extract a defect from the defect image (S220).

Specifically, the extraction unit 120 may segment and extract a defect from the defect image on the basis of a pixel according to a signal received from the at least one resource.

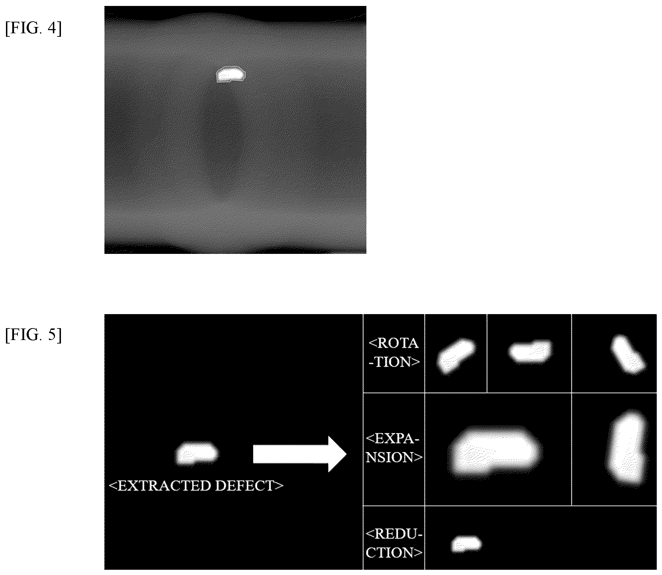

FIG. 4 is an exemplary view illustrating an example of extracting a defect according to another embodiment of the present disclosure.

As illustrated in FIG. 4, the extraction unit 120 may segment and extract a defect represented in white on the basis of a pixel according to a signal received from the at least one resource.

In this case, the extraction unit 120 may extract a defect having the same shape as that outlined by a line encompassing the defect area.

Next, the preprocessing unit 130 may apply a preset transformation method (e.g., rotation, translation, scaling down, enlargement, etc.) to the defects to transform the defect into the transformed defect (S230).

Specifically, the preprocessing unit 130 may match an identifier to the defect according to an occurrence location of the defect and apply the preset transformation method (e.g., rotating, shifting, scaling down, enlargement, or the like) to the defect to transform the defect into the transformed defect. In this case, the identifier may include the defect type and at least one preset area in which the defect type is expected to occur.

In addition, the preprocessing unit 130 may transform the defects using at least one of rotation, shift, scaling down, and enlarging according to the selection signal received from a user.

FIG. 5 is an exemplary view illustrating an example of transforming an extracted defect according to another embodiment of the present disclosure.

As illustrated in FIG. 5, the preprocessing unit 130 may apply the preset transformation method (e.g., rotating, shifting, scaling down, enlarging, or the like) to the defect and transform the defect at least once.

According to one embodiment of the present disclosure, the preprocessing unit 130 may transform the defect by rotating and enlarging the defect.

That is, the preprocessing unit 130 may transform the state of the defect by rotating, scaling down, shifting, or enlarging the defect.

Next, the synthesis unit 140 may synthesize the transformed defect with a normal image and adjust the transformed defect (S240).

Specifically, the synthesis unit 140 may identify the defect type for the defect and synthesize the defect at a location within the preset area in which the defect type is expected to occur, based on the defect type. In this case, the identification of the defect type may be performed by a pre-trained identification model. The identification model is trained to output the defect type in response to an input image including a defect, using the defect types and corresponding defect images as training data.

In addition, the synthesis unit 140 may identify the defect type of the transformed defect and synthesize the transformed defect at a location corresponding to the defect type identified from the normal image.

In addition, the synthesis unit 140 may copy and synthesize the transformed defect into the normal image and select pixels in a region adjacent to the edge of the transformed defect or in a boundary region of the edge of the transformed defect as adjustment targets.

In addition, the synthesis unit 140 may apply a predetermined adjustment method (e.g., image blending, Poisson equation, or the like) to the adjustment targets and adjust the adjustment targets.

According to one embodiment of the present disclosure, the synthesis unit 140 may apply an image blending to pixels selected as adjustment targets and adjust the pixels.

According to one embodiment of the present disclosure, the synthesis unit 140 may apply a Poisson's equation to pixels selected as adjustment targets and adjust the pixels.

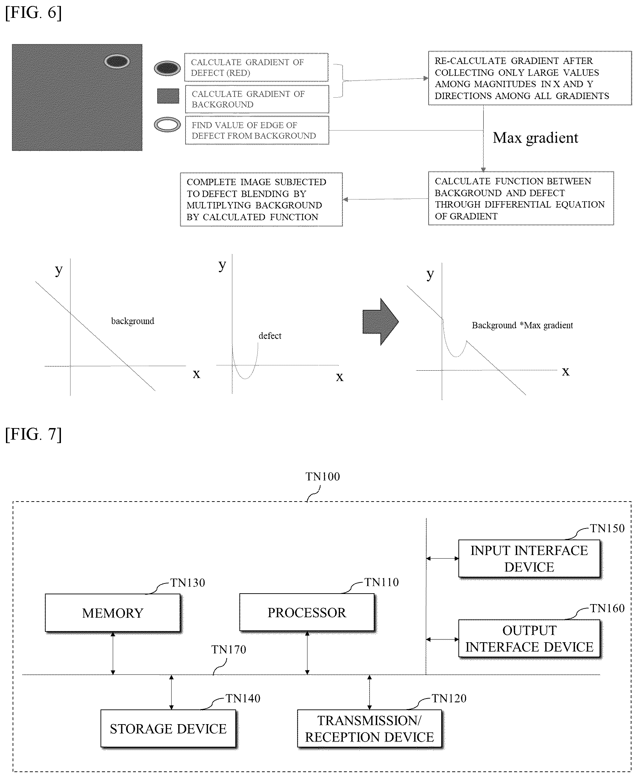

FIG. 6 is an exemplary view illustrating an example of adjusting a defect according to another embodiment of the present disclosure.

As illustrated in FIG. 6, the synthesis unit 140 may calculate a gradient of the transformed defect from the normal image with the transformed defect synthesized, calculate a gradient of the normal image, and extract the edge of the transformed defect from the normal image with the transformed defect synthesized.

In addition, the synthesis unit 140 may extract magnitudes of the gradient of the transformed defect and the gradient of the normal image in each of x and y directions from the normal image with the transformed defect synthesized, and calculate a maximum gradient using large values among the extracted magnitudes in each of the x and y directions.

According to one embodiment of the present disclosure, the synthesis unit 140 may extract the magnitudes of the gradient (e.g., (-1, 2)) of the transformed defect and the gradient (e.g., (5, 1)) of the normal image in each of the x and y directions from the normal image with the transformed defect synthesized, and calculate the maximum gradient (e.g., (5, 2)) using larger values among the extracted magnitudes in each of the x and y directions.

In addition, the synthesis unit 140 may calculate a function between the normal image with the transformed defect synthesized and the transformed defect using a differential equation for the extracted edge and the calculated gradients. Here, since the methods of calculating the gradients in the process of synthesizing an image and calculating a function between two images is the same as the methods disclosed in the related art, detailed description thereof will be omitted.

In addition, the synthesis unit 140 may adjust the edge of the transformed defect by multiplying the normal image with the transformed defect synthesized with the function to adjust the pixel values of the edge portion of the transformed defect.

According to the embodiment of the present disclosure, it is possible to decrease the saliency of the edge artifact caused by cropping a defect from a defect image and synthesizing it into a normal image.

In addition, according to the embodiment of the present disclosure, it is possible to synthesize the relatively large defect by extracting the defect and transforming the extracted defect through a set of predefined transformation methods.

Specifically, a conventional method of generating a virtual defect is a method of cropping a relatively small defect and synthesizing the cropped defect into a normal image, and since the size of a box (or a rectangular shape) including a defect is relatively small, an edge of the box does not saliently appear in the normal image. However, as the size of the defect increases, the size of the box increases, and the edge appears saliently, thereby making the defect easily revealed. Since the defect is determined by the edge of the cropped box rather than determined in the form of the defect, there is no positive effect on model training using the images accordingly.

However, according to the embodiment of the present disclosure, a relatively large defect can be synthesized by maintaining the gradient (i.e., a rate of change of pixel value) of the extracted defect through the Poisson's equation, adjusting the pixel values to be similar to those of the normal image, and setting the edge where the extracted defect contacts the normal image so as to adjust the pixel values of an edge portion of the extracted defect to be similar to the pixel values of an edge portion of the normal image.

That is, according to the embodiment of the present disclosure, the synthesis unit 140 may set the edge condition so that the edge portion of the transformed defect to be synthesized into the normal image has substantially the same pixel characteristics as an adjacent edge portion of the normal image that surrounds the transformed defect, and adjust the pixel values of the edge portion so that the edge condition is satisfied.

FIG. 7 is a view illustrating a computing device according to the exemplary embodiment of the present disclosure. The computing device TN100 in FIG. 7 may be a system described in the present specification (e.g., system 100, etc.).

In the exemplary embodiment of FIG. 7, the computing device TN100 may include at least one processor TN110, a transmission/reception device TN120, and a memory TN130. In addition, the computing device TN100 may further include a storage device TN140, an input interface device TN150, an output interface device TN160, etc. Components included in the computing device TN100 and connected to each other by a bus TN170 may communicate with each other.

The processor TN110 may execute a program command or instructions stored in at least one among the memory TN130 and the storage device TN140. The processor TN110 may refer to a hardware central processing unit (CPU), a hardware graphics processing unit (GPU), or a dedicated hardware processor on which methods according to the exemplary embodiment of the present disclosure are performed. The processor TN110 may be configured to implement procedures, functions, methods, and the like which are described in connection with the exemplary embodiment of the present disclosure. The processor TN110 may control each component of the computing device TN100.

Each of the memory TN130 and the storage device TN140 may store various information related to the operation of the processor TN110. Each of the memory TN130 and the storage device TN140 may be comprised of at least one of a volatile storage medium and a non-volatile storage medium. For example, the memory TN130 may be comprised of at least one of read only memory (ROM) and random access memory (RAM).

The transmission/reception device TN120 may transmit or receive wired signals or wireless signals. The transmission/reception device TN120 may be connected to a network and perform communication. As mentioned, the computing device TN100 shown in FIG. 7 may be a device described in the current specification. For example, the system 100 may be realized through the combination of the input interface device TN150, memory TN120, and processor TN110. This is achieved by executing instructions, stored in memory TN120, with processor TN110 to prepare three-dimensional raw data. This data is obtained by collecting, through the input interface TN150 or the transmission/reception device TN120, images from an external device.

More specifically, each of the input unit 110, the extraction unit 120, the pre-processing unit 130, and the synthesis unit 140 may be realized through the combination of the input interface device TN150, memory TN130, transmission/reception device TN120, storage device TN140, and processor TN110. This is achieved by executing instructions, stored in memory TN130 or storage device TN140, with processor TN110. The data are obtained by collecting, through the input interface TN150 or the transmission/reception device TN120.

Meanwhile, various methods according to the exemplary embodiment of the present disclosure described above may be implemented in the form of programs readable through various computer means and be recorded on non-transitory computer-readable recording media. Here, the recording media may store program commands, data files, data structures, etc., singly or in combination thereof. The program commands recorded on the recording media may be designed and configured specifically for the embodiment of the present disclosure or may be publicly known and available to those skilled in the art of computer software. For example, the recording media include: magnetic media such as hard disks, floppy disks, and magnetic tapes; optical media such as CD-ROMs and DVDs; magneto-optical media such as floptical disks; and a hardware device specially configured to store and execute program commands, the hardware device including such as ROM, RAM, flash memory, etc. Examples of the computer commands include not only machine language generated by a compiler, but also high-level language wires executable by a computer using an interpreter or the like. Such a hardware device described above may be configured to operate by using one or more software modules in order to perform the operation of the embodiment of the present disclosure, and vice versa.

Although the present disclosure has been described with reference to embodiments illustrated in the accompanying drawings, it is merely illustrative, and those skilled in the art to which the corresponding technology pertains will understand that various modifications and equivalent other embodiments are possible. Accordingly, the true technical scope of the present disclosure should be determined by the technical concept of the appended claims.

## Claims

1. A system for generating a virtual defect image (100), comprising:
an input unit (110) configured to receive a normal image and a defect image comprising at least one defect;
an extraction unit (120) configured to segment and extract a defect, represented by a plurality of pixels, from among the at least one defect in the defect image;
a preprocessing unit (130) configured to apply a preset transformation method on the defect so as to transform the defect into a transformed defect; and
a synthesis unit (140) configured to synthesize the transformed defect into the normal image and adjust the transformed defect.

2. The system of claim 1, wherein the synthesis unit (140) identifies a defect type for the defect and synthesizes the transformed defect at a location within a preset area in which the defect type is expected to occur, based on the defect type.

3. The system of claim 1 or 2, wherein the preprocessing unit (130) matches an identifier to the defect according to an occurrence location of the defect and applies the preset transformation method to the defect to transform the defect into the transformed defect.

4. The system of claim 1, wherein the synthesis unit (140) synthesizes the transformed defect into the normal image and selects pixels in a region adjacent to an edge of the transformed defect as adjustment targets.

5. The system of claim 1 or claim 4, wherein the synthesis unit (140) sets an edge condition so that an edge portion of the transformed defect synthesized into the normal image has substantially the same pixel characteristics as an adjacent edge portion of the normal image that surrounds the transformed defect, and adjusts pixel values of the edge portion so that the edge condition is satisfied.

6. The system of claim 5, wherein the synthesis unit (140) calculates a gradient of the transformed defect from the normal image with the transformed defect synthesized, calculates a gradient of the normal image, and extracts an edge of the transformed defect.

7. The system of claim 6, wherein the synthesis unit (140) extracts magnitudes of the gradient of the transformed defect and the gradient of the normal image in each of x and y directions, and calculates a maximum gradient using large values among the magnitudes in each of the x and y directions.

8. The system of claim 7, wherein the synthesis unit (140) calculates a function between the normal image and the transformed defect using a differential equation for the edge and the maximum gradient calculated using the large values among the magnitudes in each of the x and y directions, and multiplies the normal image with the function to adjust the pixel values of the edge portion.

9. A method of generating a virtual defect image performed by a system for generating a virtual defect image according to any one of claim 1 to 8, comprising:
receiving, by an input unit (110), a normal image and a defect image comprising at least one defect (S210);
segmenting and extracting, by an extraction unit (120), a defect, represented by a plurality of pixels, from among the at least one defect in the defect image (S220);
applying, by a preprocessing unit (130), a preset transformation method on the defect so as to transform the defect into a transformed defect (S230); and
synthesizing, by a synthesis unit (140), the transformed defect into the normal image and adjusting the transformed defect (S240).

10. The method of claim 9, wherein the adjusting of the transformed defect (S240) includes identifying a defect type for the defect and synthesizing the transformed defect at a location within a preset area in which the defect type is expected to occur, based on the defect type.

11. The method of claim 9 or 10, wherein the extracting of the defect (S220) includes matching an identifier to the defect according to an occurrence location of the defect and applying the preset transformation method to the defect to transform the defect into the transformed defect.

12. The method of claim 9, wherein the adjusting of the transformed defect (S240) includes synthesizing the transformed defect into the normal image and selecting pixels in a region adjacent to an edge of the transformed defect as adjustment targets.

13. The method of claim 9 or claim 12, wherein the adjusting of the transformed defect (S240) includes setting an edge condition so that an edge portion of the transformed defect synthesized into the normal image has substantially the same pixel characteristics as an adjacent edge portion of the normal image that surrounds the transformed defect, and adjusting pixel values of the edge portion so that the edge condition is satisfied.

## Amended claims

### Amended claims in accordance with Rule 137(2) EPC.

1. A system for generating a virtual defect image (100), comprising:
an input unit (110) configured to receive a normal image and a defect image comprising at least one defect;
an extraction unit (120) configured to segment and extract a defect, represented by a plurality of pixels, from among the at least one defect in the defect image;
a preprocessing unit (130) configured to apply a preset transformation method on the defect so as to transform the defect into a transformed defect; and
a synthesis unit (140) configured to synthesize the transformed defect into the normal image and adjust the transformed defect, wherein the synthesis unit (140) identifies a defect type for the defect and synthesizes the transformed defect at a location within a preset area in which the defect type is expected to occur, based on the defect type.

2. The system of claim 1, wherein the preprocessing unit (130) matches an identifier to the defect according to an occurrence location of the defect and applies the preset transformation method to the defect to transform the defect into the transformed defect.

3. The system of claim 1, wherein the synthesis unit (140) synthesizes the transformed defect into the normal image and selects pixels in a region adjacent to an edge of the transformed defect as adjustment targets.

4. The system of claim 1 or claim 3, wherein the synthesis unit (140) sets an edge condition so that an edge portion of the transformed defect synthesized into the normal image has substantially the same pixel characteristics as an adjacent edge portion of the normal image that surrounds the transformed defect, and adjusts pixel values of the edge portion so that the edge condition is satisfied.

5. The system of claim 4, wherein the synthesis unit (140) calculates a gradient of the transformed defect from the normal image with the transformed defect synthesized, calculates a gradient of the normal image, and extracts an edge of the transformed defect.

6. The system of claim 5, wherein the synthesis unit (140) extracts magnitudes of the gradient of the transformed defect and the gradient of the normal image in each of x and y directions, and calculates a maximum gradient using large values among the magnitudes in each of the x and y directions.

7. The system of claim 6, wherein the synthesis unit (140) calculates a function between the normal image and the transformed defect using a differential equation for the edge and the maximum gradient calculated using the large values among the magnitudes in each of the x and y directions, and multiplies the normal image with the function to adjust the pixel values of the edge portion.

8. A method of generating a virtual defect image performed by a system for generating a virtual defect image according to any one of claim 1 to 7, comprising:
receiving, by an input unit (110), a normal image and a defect image comprising at least one defect (S210);
segmenting and extracting, by an extraction unit (120), a defect, represented by a plurality of pixels, from among the at least one defect in the defect image (S220);
applying, by a preprocessing unit (130), a preset transformation method on the defect so as to transform the defect into a transformed defect (S230); and
synthesizing, by a synthesis unit (140), the transformed defect into the normal image and adjusting the transformed defect (S240), wherein the adjusting of the transformed defect (S240) includes identifying a defect type for the defect and synthesizing the transformed defect at a location within a preset area in which the defect type is expected to occur, based on the defect type.

9. The method of claim 8, wherein the extracting of the defect (S220) includes matching an identifier to the defect according to an occurrence location of the defect and applying the preset transformation method to the defect to transform the defect into the transformed defect.

10. The method of claim 8, wherein the adjusting of the transformed defect (S240) includes synthesizing the transformed defect into the normal image and selecting pixels in a region adjacent to an edge of the transformed defect as adjustment targets.

11. The method of claim 8 or claim 10, wherein the adjusting of the transformed defect (S240) includes setting an edge condition so that an edge portion of the transformed defect synthesized into the normal image has substantially the same pixel characteristics as an adjacent edge portion of the normal image that surrounds the transformed defect, and adjusting pixel values of the edge portion so that the edge condition is satisfied.
